# EUROPEAN PATENT APPLICATION

(11) **EP 4 697 054 A1**
(43) Date of publication of application: **18.02.2026**
(21) Application number: 24275096.6
(22) Date of filing: 15.08.2024
(51) Int. Cl.: G01S 5/02, G01S 5/06, G01S 5/00

(54) **DATA PROCESSING FOR SIGNAL SOURCE LOCATION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The application relates to a method of processing data for estimating a location of a source of an electromagnetic signal, a system comprising apparatus for carrying out the method, and a computer-readable medium storing a computer program for carrying out the method, wherein the method comprises: obtaining a plurality of sample streams, each sample stream comprising a plurality of data values representative of successive samples of a property of the signal as received at a respective one of a plurality of vehicles, each sample stream further comprising timestamp information comprising one or more timestamps, each timestamp indicating the time at which a corresponding one of the data values was sampled;
obtaining start-time-aligned sample streams by (i) comparing pairs of timestamps, each pair comprising a timestamp from a first sample stream of the plurality of sample streams and a timestamp from a second sample stream of the plurality of sample streams, the comparing further comprising determining a respective time difference between at least one pair of timestamps, (ii) selecting a pair of timestamps which have a time difference that does not exceed a first predetermined maximum time difference, said selected pair comprising a first selected timestamp from the first sample stream and a second selected timestamp from the second sample stream, and (iii) time-aligning the starts of the first and second sample streams based on the selected pair of timestamps, by disregarding data values in the first sample stream which are earlier than the first selected timestamp, and disregarding data values in the second sample stream which are earlier than the second selected timestamp; and estimating a location of the source of the signal, based upon the start-time-aligned sample streams.

## Description

### Field

The present disclosure relates to a method of processing respective sampled data streams from each of a plurality of vehicles, wherein each sampled data stream represents a property of an electromagnetic signal, e.g. a radio signal, received at a respective one of the plurality of vehicles, said processing being for estimating a location of a source of the signal. Also disclosed is a system, apparatus, a computer program arranged for carrying out said method, and a computer-readable medium storing such a computer program.

### Background

It can be desirable to locate a source of an electromagnetic signal emission, e.g. a radio signal transmission, for example a signal source located somewhere on or near the Earth's surface in the case of ground-based or marine-based signal sources, or a signal source in free space. Passive location (e.g. without any requirement to attach a tracking beacon to the source) can be achieved by monitoring for reception of the signal at a plurality of receivers (e.g. usually at least three receivers, typically carried on separate vehicles). The signal, as received at each of the plurality of receivers, can be digitally sampled, such that a sampled data stream corresponding to the received signal is produced by each receiver. The plurality of resulting sampled data streams can then be provided to a processing unit for processing. When the positions of said receivers are known, techniques such as multilateration can be used at the processing unit to estimate the location (e.g. a "geolocation" which is a position on the Earth's surface, or a position in free space) of the signal source, based on differential factors such as the Time Difference Of Arrival (TDOA) between reception of the signal at each of the receivers. It is desirable that position estimation accuracy, geographical coverage area, and/or operational efficiency are maximised. However, existing systems and methods have hitherto failed to perform completely satisfactorily. One aspect of existing systems requiring improvement is the processing of the sampled data streams, and the present disclosure aims to alleviate, at least to an extent, problems associated with existing technology.

### Summary

According to a first aspect of the present disclosure there is provided a computer-implemented method of processing data for estimating a location of a source of an electromagnetic signal, the method comprising:
obtaining a plurality of sample streams, each sample stream comprising a plurality of data values representative of successive samples of a property of the signal as received at a respective one of a plurality of vehicles, each sample stream further comprising timestamp information comprising one or more timestamps, each timestamp indicating the time at which a corresponding one of the data values was sampled;
obtaining start-time-aligned sample streams by:
   (i) comparing pairs of timestamps, each pair comprising a timestamp from a first sample stream of the plurality of sample streams and a timestamp from a second sample stream of the plurality of sample streams, the comparing further comprising determining a respective time difference between at least one pair of timestamps;
   (ii) selecting a pair of timestamps which have a time difference that does not exceed a first predetermined maximum time difference, said selected pair comprising a first selected timestamp from the first sample stream and a second selected timestamp from the second sample stream; and
   (iii) time-aligning the starts of the first and second sample streams based on the selected pair of timestamps by disregarding data values in the first sample stream which are earlier than the first selected timestamp, and disregarding data values in the second sample stream which are earlier than the second selected timestamp; and
estimating a location of the source of the signal, based upon the start-time-aligned sample streams.

Optionally, obtaining start-time-aligned sample streams further comprises aligning a third sample stream by:
(iv) comparing second pairs of timestamps, each second pair comprising a timestamp from the first sample stream or from the second sample stream, and a timestamp from a third sample stream of the plurality of sample streams, the comparing further comprising determining a respective time difference between at least one second pair of timestamps;
(v) selecting one of the second pairs of timestamps which have a time difference that does not exceed a second predetermined maximum time difference, said selected second pair comprising a third selected timestamp from the first or the second sample stream and a fourth selected timestamp from the third sample stream; and
(vi) time-aligning the starts of the first to third sample streams by disregarding data values in the first and second sample streams which are earlier than the third selected timestamp, and disregarding data values in the third sample stream which are earlier than the fourth selected timestamp.

Optionally, the second predetermined maximum time difference differs from the first predetermined maximum time difference.

Optionally, obtaining start-time-aligned sample streams further comprises aligning a fourth sample stream by:
(vii) comparing third pairs of timestamps, each third pair comprising a timestamp from one of the first to third sample streams, and a timestamp from a fourth sample stream of the plurality of sample streams, the comparing further comprising determining a respective time difference between each third pair of timestamps; and
(viii) selecting one of the third pairs of timestamps which have a time difference that does not exceed a third predetermined maximum time difference, said selected third pair comprising a fifth selected timestamp from any of the first to third sample streams and a sixth selected timestamp from the fourth sample stream; and
(ix) time-aligning the starts of the first to fourth sample streams by disregarding data values in the first to third sample streams which are earlier than the fifth selected timestamp, and disregarding data values in the fourth sample stream which are earlier than the sixth selected timestamp.

Optionally, the third predetermined maximum time difference differs from at least one of the first and second predetermined maximum time differences.

Optionally, the first predetermined maximum time difference is between 10ns and 100ns, and optionally is between 20ns and 50ns, and optionally the predetermined maximum time difference is about 40ns.

Optionally, the selected timestamps are those which are earliest in time.

Optionally, the timestamp information of one or more of the sample streams is derived only from a GNSS (global navigation satellite system) pulse event.

Optionally, the timestamp information of one or more of the sample streams is derived from both a GNSS (global navigation satellite system) pulse event and a free-running clock in the respective vehicle.

Optionally, the timestamp information comprises date and time information.

Optionally, the property of the signal is at least one of frequency, phase and amplitude.

Optionally, the step of obtaining start-time-aligned sample streams is preceded by a step of sorting timestamps from the plurality of sample streams, and optionally wherein the sorting is performed in ascending order.

Optionally, the step of obtaining start-time-aligned sample streams is preceded by a step of disregarding, in one or more of the data streams, timestamp information that does not correspond to a GNSS (global navigation satellite system) pulse event.

Optionally, estimating a location of the source of the signal based upon the start-time-aligned sample streams is further based upon vehicle position data indicating the position of each of the vehicles. Optionally, the vehicle position data is filtered by disregarding vehicle position data that is tagged with timestamp information that is earlier than the timestamp information of the earliest data values remaining in the start-time-aligned sample streams. Optionally, the vehicle position data is filtered by disregarding vehicle position data that is tagged with timestamp information that is later than the timestamp information of the latest data values remaining in the start-time-aligned sample streams.

Optionally, estimating a location of the source of the signal is further based upon a predetermined time period within which data relating to said time period is used for location estimation and without which data not relating to said time period is not used for location estimation.

Optionally, prior to estimating a location of the source of the signal, each start-time-aligned sample stream is reshaped into one or more segments of equal predetermined size to compensate for variation of a frequency of a sampling clock by which data values of the respective start-time-aligned sample stream were sampled, compared to a frequency of a sampling clock by which data values of a reference one of the start-time-aligned sample streams were sampled. Optionally, the reshaping comprises subdividing, and/or time-stretching or time-compressing. Optionally, the predetermined size is equal to the sampling rate of the sample streams multiplied by the predetermined time period.

Optionally, estimating a location of the source of the signal is further based upon one or more of: a calibration vector used to mitigate timing error biases; and/or
determined validity for each vehicle, based on their position and/or status of successful sample stream alignment.

Optionally, the start-time-aligned sample streams are tagged with one or more of: validated position data for each vehicle; and/or status indicating for each vehicle whether or not the respective vehicle's sample stream can be used for the step of estimating location, by virtue of the respective vehicle's sample stream having been successfully start-time-aligned.

Optionally, the method is a method performed at a ground controller station.

Optionally, the method is a method performed at a vehicle, and optionally performed at one or more of the plurality of vehicles.

According to a second aspect of the present disclosure there is provided a system comprising: a plurality of vehicles, wherein each of the plurality of vehicles comprises means for successively sampling a property of an electromagnetic signal as received at the respective vehicle to produce a respective sample stream comprising a plurality of data values, and each of the plurality of vehicles further comprises means for receiving an GNSS signal and based on the GNSS signal adding timestamp information to the respective sample stream, the timestamp information comprising one or more timestamps, each timestamp indicating the time at which a corresponding one of the data values was sampled; and a location estimator comprising one or more processors arranged to carry out a method according to the first aspect. Optionally, each of the vehicles is one of: a spacecraft, an airborne vehicle, and a marine-based vehicle.

According to a third aspect of the present disclosure there is provided apparatus comprising one or more processors configured to carry out a method according to the first aspect.

According to a fourth aspect of the present disclosure there is provided a computer program comprising machine-readable instructions that when executed by one or more processors causes the one or more processors to carry out a method according to the first aspect.

According to a fifth aspect of the present disclosure there is provided one or more computer-readable media having stored thereupon a computer program according to the fourth aspect.

It will be appreciated in the light of the present disclosure that certain features of certain aspects and/or embodiments described herein can be advantageously combined with those of other aspects and/or embodiments. The following description of specific embodiments should not therefore be interpreted as indicating that all of the described steps and/or features are essential. Instead, it will be understood that certain steps and/or features are optional by virtue of their function or purpose, even where those steps or features are not explicitly described as being optional. The above aspects are thus not intended to limit the scope of the present invention which is instead defined by the appended claims.

### Description of Figures

Aspects of the disclosure may be carried out in various ways and some preferred embodiments will now be described by way of example only and in a non-limiting way with reference to the accompanying drawings, in which:
Figure 1 is a perspective view of a cluster of vehicles, said vehicles having their movement and relative positions controlled so as to maintain a fixed arrangement relative to each other, said vehicles provided for receiving an electromagnetic signal, such as a radio signal, and producing a sample stream of data values representative of successive samples of a property of said signal.
Figure 2 is an illustration of such a signal source, said source located within a common coverage area of the cluster of vehicles, the Figure also showing individual vehicle coverage areas.
Figure 3 is a schematic representation of a "Geolocation Management System" (GMS) including a processing unit for processing sampled data streams obtained from a plurality of vehicles, so as to passively estimate a location of a source of the signal received by the plurality of vehicles, said location optionally being either a geolocation or a location in free space.
Figure 4 is a flow diagram illustrating an overview of steps of processing a plurality of sample streams such as those obtained from the vehicles of Figure 1, to produce an estimate of a location of a source of an electromagnetic signal emission such as a radio transmission.
Figure 5 is a flow diagram illustrating, in more detail, steps of a process of sample stream alignment corresponding to the step of sample stream alignment in Figure 4.
Figure 6 is a flow diagram depicting steps performed in an example of a method having core features of the method described with reference to Figures 4 and 5.
Figure 7 is an illustration of misaligned sample streams produced by vehicles such as those shown in Figure 1.
Figure 8 is an illustration of such sample streams as shown in Figure 7, after said sample streams have been start-time-aligned by a method such as that shown in Figures 5 or 7.
Figure 9 is an illustration of start-time-aligned sample streams which have been reshaped to compensate for clock frequency and phase differences between on-board clock oscillators of the vehicles.

### Detailed Description

Passively locating a source of an electromagnetic signal emission such as a radio signal transmission (passive meaning without any need to tag the source with a position determining apparatus such as a GPS receiver, and without any need to transmit a signal towards the source), on or near the Earth's surface (termed "geolocating"), or in free space, can be achieved by monitoring for reception of the signal at a plurality of receivers having known positions. Multilateration techniques can be used to determine the position of said signal source based on differential factors such as Time Difference Of Arrival (TDOA) between reception of the signal at each of the receivers. Such multilateration techniques, and others such as Frequency Difference of Arrival (FDOA), can be used to estimate a location of a "target" signal source, and require the combination and processing of data from multiple receivers of the signal to provide location estimation.

To increase geographical coverage, said receivers are typically mounted on vehicles such as aircraft, marine vessels, or advantageously on orbiting spacecraft (e.g. spacecraft flying in Low Earth Orbit). Said advantages of spacecraft include greater geographical coverage resulting from greater height above the Earth's surface, and low propulsion requirements due to low levels of friction in space. Various formations of satellite-mounted receivers can be employed, e.g. "trailing" formations comprising multiple satellites orbiting on the same path and separated by a specific time interval, "cluster" formations comprising multiple satellites in a dense arrangement, and "constellation" formations comprising several satellites with coordinated ground coverage, operating together under shared control. It has been found that accuracy, geographical coverage area, and (to an extent) operational efficiency, depend upon the number of receivers employed, their spatial separation, and their geometric arrangement relative to each other.

Each vehicle employs a detector, such as an omnidirectional VHF (very high frequency) antenna, to capture electromagnetic signals, such as radio signals, transmitted or emitted by a signal source of interest. Typically, the signal captured (i.e. received) by a particular vehicle's antenna is successively sampled at discrete intervals in accordance with a sampling "clock" signal (e.g. an oscillating signal having a fixed frequency) that is local to the particular vehicle, resulting in a sample stream consisting of a series of data values. Each such data value, or "sample", captured at each sample time (e.g. upon each rising and/or falling edge of the sampling clock signal), corresponds to a sampled property of the received signal, for example amplitude, phase and/or frequency. In other words, at each vehicle, a sampling clock of a predetermined frequency is used to successively sample the signal (e.g. a property of the signal such as one or more of amplitude, phase and frequency) as received at the respective vehicle, to produce a stream of data values, termed a sample stream. The vehicle typically timestamps some or all of the data values, e.g. by including time information (termed "timestamp data") in the sample stream, said timestamp data associated with particular data sample values and indicating a time at which each of the particular data values was sampled. The time information in the timestamps is typically obtained by the vehicle from GNSS (Global Navigation Satellite System) transmissions that the vehicle periodically receives, and may be augmented by time information generated on-board the vehicle (e.g. by a free-running clock that may or may not be updated/synchronised each time GNSS information is received).

The plurality of resulting sampled data streams are then provided to a processing unit (which can be termed a location estimator), for processing to estimate a location of the source of the signal. With knowledge of the positions of the receivers, the processing unit employs multilateration techniques to estimate the location (e.g. the position on the Earth's surface) of the signal source, based on differential factors such as the Time Difference Of Arrival (TDOA) and/or Frequency Difference of Arrival (FDOA) between reception of the signal at each of the receivers. By way of example, all or a part of the processing unit may be located on one of the vehicles, and/or at a remote station such as at a ground-based controller station. Processing at a ground-based station is advantageous due to relatively easy availability of electrical power for powering one of more processors, however it is envisaged that using the techniques described herein it may be possible to perform the processing efficiently enough that some or all of the processing method described herein can be carried out onboard one or more of the vehicles.

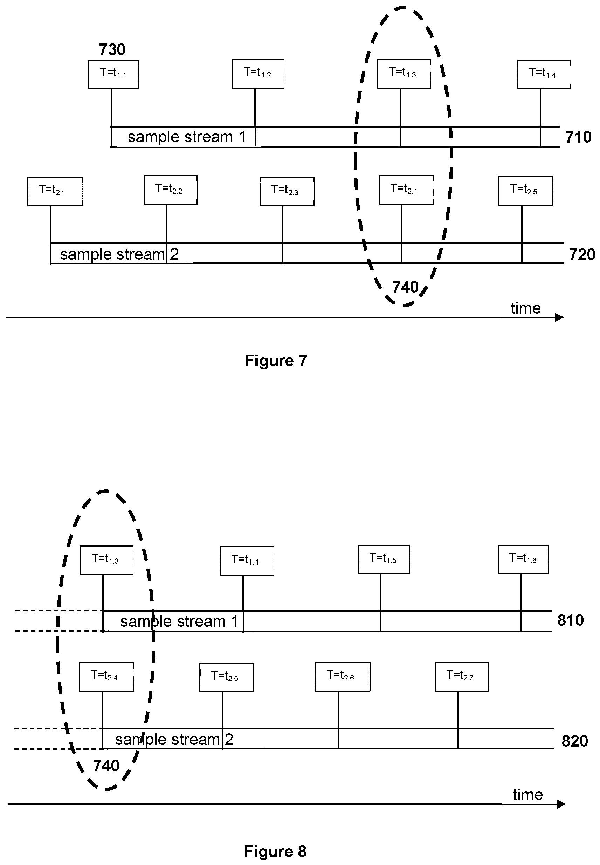

It is desirable that position estimation accuracy, geographical coverage area, and/or operational efficiency are maximised. However, existing systems and methods have hitherto failed to perform completely satisfactorily. One reason why processing of the sampled data streams (otherwise termed "sample streams") can be difficult is if each receiver/vehicle operates independently without being under control of a common operating "clock" signal. For example, each vehicle typically has its own sampling clock signal, which may be unsynchronised with respect to sampling clock signals of other vehicles (e.g. even if the sampling clock signals of all vehicles are designed to be as near identical as possible within practical limits, there are always small differences), and so each vehicle's clock signal will typically have a slightly different frequency and/or phase with respect to any of the other vehicles' clock signals, and these differences may change/drift with time and/or temperature and/or according to other factors. This causes processing difficulty, because in such circumstances the absolute point in time at which each vehicle samples the received signal can differ in frequency and/or phase, as illustrated in Figure 7, and so it can be difficult, when processing the resulting sampled data, to relate data values and timestamps from one sample stream from a first vehicle to data values and timestamps from another sample stream from a second vehicle. Thus, such sampling time differences can degrade position estimation accuracy, even when the differences are small.

A further factor in the sample streams (illustrated in Figure 7), which increases processing difficulty, arises because each vehicle can commence sampling at different times, resulting in staggered start times between sample streams from different vehicles. For example, vehicles may begin sampling only when they have obtained lock on a GNSS (Global Navigation Satellite System) time signal, which for example can be used as a time reference for the sample streams. Thus, a first vehicle might obtain GNSS lock and begin sampling the received signal from a signal source of interest, and some time later a second (and optionally a third and/or fourth) vehicle might obtain GNSS lock and begin sampling the received signal. The processing method/apparatus used to process sample streams obtained from such vehicles must be able to cope with such differences in sampling frequency, phase and/or start time. The present disclosure aims to alleviate, at least to an extent, problems (such as those aforementioned) associated with existing systems and methods. Existing systems have solved this problem by such solutions as transmitting a common "clock" signal to each vehicle, however such previous solutions have proven to be relatively cumbersome, expensive and/or unreliable.

The present disclosure relates to methods, apparatus and computer programs for synchronising respective sampled data streams obtained from a plurality of vehicles, each of said vehicles having successively sampled a received signal emitted by an object of interest. Such disclosure improves the accuracy and convenience of location position estimation, at least (i) by virtue of improving the accuracy by which datasets collected by a plurality of vehicles can be synchronised/aligned, (ii) by reducing the amount of data that is thrown away in the synchronisation process, and (iii) by providing for the processing to be performed in a convenient and practical manner which requires reduced data processing power compared to existing techniques.

Although the techniques described herein are envisaged as being used in connection with receivers mounted on orbiting spacecraft moving along orbital paths, the disclosed techniques are also applicable to receivers mounted upon aircraft flying along paths that are not strictly-speaking "orbits" but nevertheless are circular/elliptical and geocentric, termed herein "geocentric paths", which are thereby at least partially equivalent to an orbital path (or at least a part of such a path). Similarly, the disclosed techniques can also be applied to receivers mounted on marine craft travelling along at least a part of a geocentric path (e.g. along at least part of a circular path around the perimeter of the Earth). It is also noted that in the case of marine-vehicle-mounted receivers, although their elevation above the Earth's surface is relatively small, it is possible that they may be used to locate a signal source that is higher above them. Thus, the following description should not be interpreted as being limited to said receivers being mounted only on spacecraft. Provided that the receiver positions are known, then such differential receiver techniques can be used to estimate a location of a signal source. For example, data corresponding to (or derived from) the received signal can be sent from each vehicle to a common processing station where data from each vehicle can be collated and processed using multilateration techniques, e.g. based on Time Difference of Arrival (TDOA) and/or Frequency Difference of Arrival (FDOA), to thereby estimate the location of the signal source. The techniques disclosed herein assist with improving the accuracy of such location position estimation.

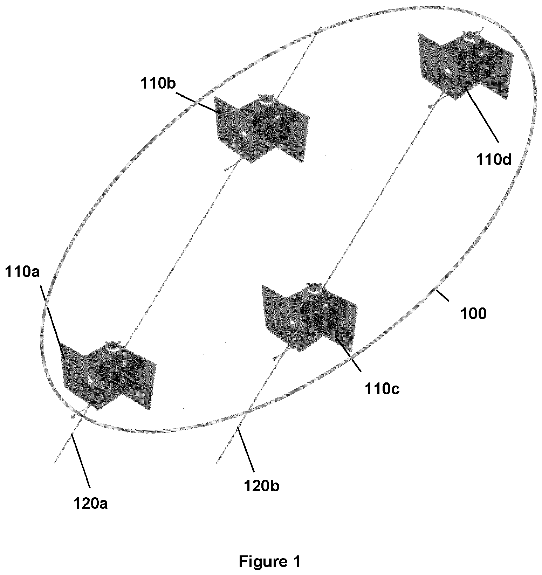

Referring to Figure 1, a receiver formation 100 is shown having first to fourth vehicle positions 110a-110d. Each vehicle has mounted thereon a receiver for receiving a signal transmitted by a signal source that is to be located. By way of example, each of the receivers employs a detector such as an omnidirectional Very-High Frequency (VHF) antenna to capture a signal of interest, the source of which is to be located, although other types of detectors can be used for other types of electromagnetic signals, e.g. optical detectors for optical signals. The vehicles travel in close vicinity, so as to be able to detect a maximum number of common targets (e.g. signal sources of interest) on the Earth's surface, since minimising vehicle separation maximises coverage area, however, conversely, to maximise location accuracy a minimum separation needs to be guaranteed between all the vehicles in the formation (or "cluster").

As shown in Figure 1, a plurality of vehicles are, at a time or times, positioned at first to fourth vehicle positions 110a-110d. In this example the first and second vehicle positions 110a,110b are located on a first geocentric path 120a (e.g. a first orbital path which lies in a first orbital plane), and the third and fourth vehicle positions 110c,110d are located on a second geocentric path 120b (e.g. a second orbital path which lies in a second orbital plane), however other relative arrangements of the vehicles are possible provided that positions of the vehicles are known, and provided that a certain distance is maintained between the vehicles (said distance being determinative of location estimation accuracy and of coverage area). The vehicles move along their corresponding paths, maintaining a relatively fixed arrangement with respect to one another, while each regularly performing an operation to capture a signal that is transmitted by a signal source of interest.

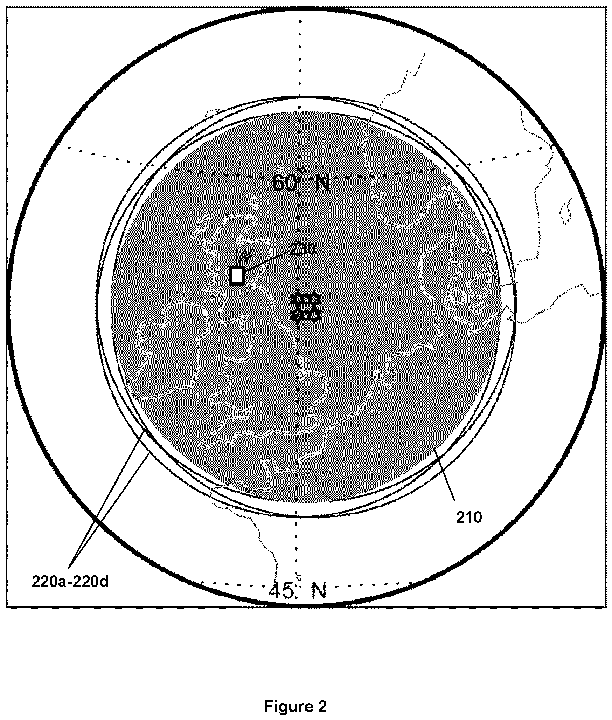

As illustrated in Figure 2, each of the four vehicles with their onboard receivers employ a detector such as an omnidirectional Very-High Frequency (VHF) antenna to capture terrestrial transmissions of interest (for which location is to be estimated), such as signal source 230. A characteristic of an omnidirectional antenna is to receive signals equally from all directions, and this behaviour is modelled as a purely spherical antenna pattern (as shown by separate offset circles 220a-220d corresponding to individual coverage areas for each of the respective receivers, that being the intersection of the respective antenna patterns with a spherical Earth). A common coverage area 210, projected onto the Earth's surface, is the intersection of the individual coverage areas, which results in an approximately circular projected area. The circular common coverage area 210 can be calculated for a given angle of elevation (measured as the angle from a horizontal plane on the Earth's surface to the line of sight between the point of signal transmission/emission and a respective one of the receivers). The common coverage area 210 (see Figure 2) is ideally maximised to optimize revisit time performance of the vehicle cluster, however maximising common coverage area 210 requires minimisation of the maximum separation distance between vehicles (the maximum separation distance being the largest separation distance between any two of the vehicles), and reducing separation distance decreases position estimation accuracy. A trade-off is therefore reached between coverage area and accuracy. Increasing separation distance between vehicles increases the Time Difference of Arrival (TDOA) and so as a consequence provides higher location estimation precision. However, increasing vehicle separation causes a reduction in common coverage area 210, which may be detrimental to operating costs and/or update frequency (due to lower revisits and reduced time over a target area).

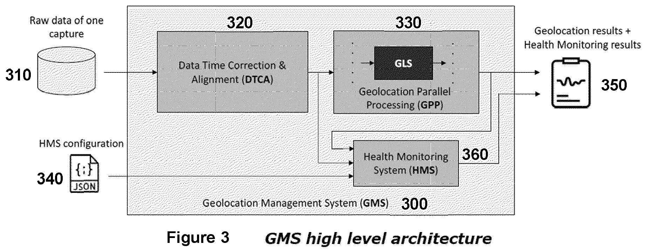

Increased accuracy can also result from the vehicles being located at substantially the same orbital altitude, which tends to result in each receiver being subject to the same (e.g. atmospheric) perturbations and differences in orbital dynamics, which factors therefore cancel out, minimising errors in position estimation which could otherwise result. As shown in Figure 1, first to fourth vehicle positions 110a-110d can be arranged in a formation, with each vehicle position 110a-110d being substantially in a common geocentric shell, e.g. having a substantially same radius from the Earth's centre. During operation, formation maintenance (e.g. under control of a "Geolocation Management System", GMS 300, such as that illustrated in Figure 3 - the name not being limited to only geolocation but also potentially covering locating in free space) is performed to maintain vehicle altitudes, to ensure the same orbital dynamic and minimum formation drift, and to maintain the vehicles' relative formation, thereby ensuring the most accurate location results. For example, said GMS 300 can be used to instruct one or more of the vehicles to execute said manoeuvres and can be used to receive the captured data 310 from the vehicles, and subsequently perform processing on the sampled data streams so as to estimate a location of the signal source 230 which transmitted the signal. Other methods of maintaining vehicle alignment can be used.

In one example, each of the vehicles can comprise one or more processors configured for executing a stored computer program comprising machine-readable instructions (e.g. stored on one or more machine-readable media of said vehicle) that when executed by said one or more processors causes the one or more processors to act upon obtained navigation information (e.g. navigation information sent to the respective vehicle by the GMS 300) by causing said vehicle to control (e.g. adjust and/or maintain) its position in accordance with said navigation information. The navigation information can be obtained via a receiver of the vehicle, and can comprise one or more of: computer program instructions; parameters; commands; positional coordinates; and data from which such instructions, parameters, commands and positional coordinates can be derived.

Generally, captured data 310 (sample streams) are obtained from each of a plurality of vehicles, and then alignment of the sample streams 310 is first performed, according to the techniques disclosed herein. This obtaining/aligning can for example be performed at GMS 300 as illustrated in Figure 3, which may be ground-based, or may be based on one of the vehicles or at another vehicle. Once the sample streams 310 have been aligned, then multilateration techniques (the details of which are outside of the scope of this disclosure) can be performed (e.g. by location processing module 330 of GMS 300) based on one or more measured differential properties of the received signal (such as for example Time Difference Of Arrival, TDOA, or Frequency Difference Of Arrival, FDOA) to determine an estimate of the location of the signal source of interest.

Shown in Figure 3 is a "Geolocation Management System" (GMS) 300 (which is not limited to only geolocation but can apply also to locating in free space). The GMS 300 obtains (e.g. receives via one or more wireless communication links) respective sample streams 310 (each comprising a plurality of data values representative of successive samples of a property, such as amplitude, phase and/or frequency, of a signal as received at a respective vehicle) from each vehicle, corresponding to the received/captured signal at the respective vehicle position 110a-110d. The GMS 300 comprises processing means, such as one or more computer processors suitably programmed, for processing the captured data 310 obtained from the vehicles. The vehicles may not be synchronised in time (e.g. if they do not operate from a common processor clock), therefore the sample streams that the vehicles produce are assumed to not be synchronised with respect to one another. Thus as shown in Figure 7, the timestamps 730 which are embedded in the sample streams 710, 720 can be offset compared to the raw data values in the sample streams by unknown offsets (comparing timestamps in one sample stream with timestamps in another sample stream), and also the sampling rates of each sample stream may differ slightly (and may drift), when comparing one sample stream to another.

The captured data 310 obtained from the vehicles is first processed by a data stream alignment module 320 (otherwise termed a "Data Time Correction & Alignment" module), which aligns the start times of the respective captured data (sample streams) 310, 710, 720 from each vehicle, and which optionally also can reshape sample streams 810, 820 after start-alignment to compensate for differences and/or drift in sampling rate and/or phase between sample streams (e.g. by stretching/compressing/time-shifting data samples with respect to time). The aligned sample streams are then processed by a location processing module 330 (which can employ parallel processing, such as in the example shown in Figure 3 which uses "Geolocation Parallel Processing" GPP module 330, the name not limiting operation to only geolocation but also covering locating in free space), which estimates a location of a source 230 of the received/captured signal, using differential techniques such as TDOA based on the start-time-aligned captured data 310, to produce location results 350 comprising the estimated location.

The GMS 300 typically also comprises a Health Monitoring System 360, which monitors the health of the vehicles, optionally in accordance with health monitoring configuration information 340, and provides health status which is optionally included with the location results 350. The GMS can optionally also comprise means for performing other maintenance-related tasks, such as e.g. monitoring vehicle positions and movement paths, and issuing course adjustment instructions to the vehicles as required, so as to maintain the vehicles in a relatively fixed arrangement in their respective vehicle positions 110a-110d.

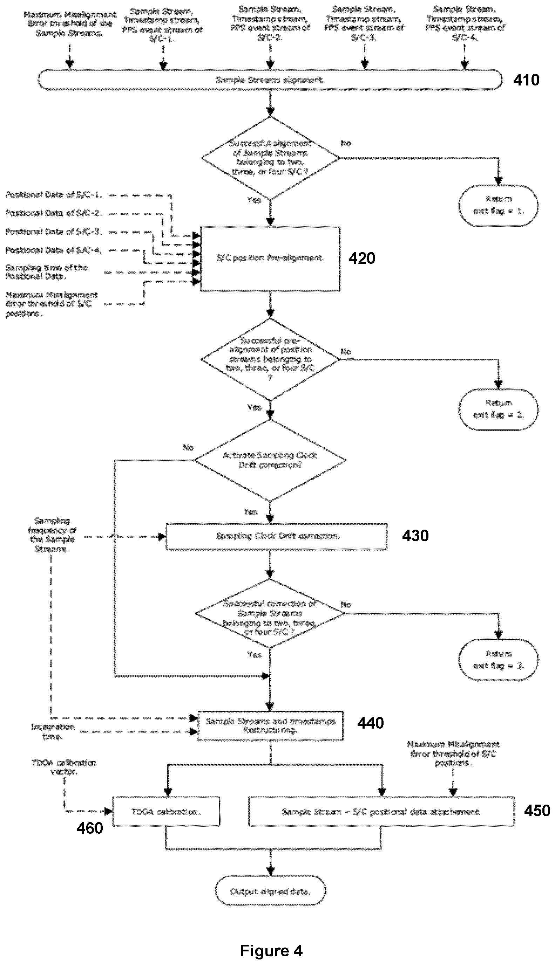

Referring to Figure 4 (and Figures 3 and 7), an overview of a method carried out in embodiments of the herein-described location estimation scheme will now be described. In overview, a "Data Time Correction & Alignment" (DTCA) algorithm uses inputs comprising sample streams 310 obtained from two, three, or four vehicles (and optionally additional vehicles) which sample streams 310, 710, 720 comprise timestamps 730. The DTCA algorithm also uses (i) vehicle positional data (e.g. received from each vehicle as part of the sample stream, wherein each vehicle can determine its position 110a-110d using techniques such as GPS), (ii) the "integration time" (which is the time period over which TDOA is estimated), and optionally (iii) a "TDOA calibration vector" (which is a vector of calibration values used to mitigate timing error biases), to produce time-aligned sample streams 910, 920 belonging to two, three, or four vehicles, which time-aligned sample streams 910, 920 can be divided into segments of a fixed duration which can further be tagged by validated vehicle position data. The DTCA algorithm can also indicate the validity status of each vehicle (i.e. whether the vehicle's sample streams and/or position have been validated for use in location estimation), which validity can be based on their validated positions and/or on the alignment status of their sample streams, and this can allow location failure to be mitigated in the case of an otherwise insufficient number of valid vehicle sample streams being available. Six steps of this process will now be described in more detail.

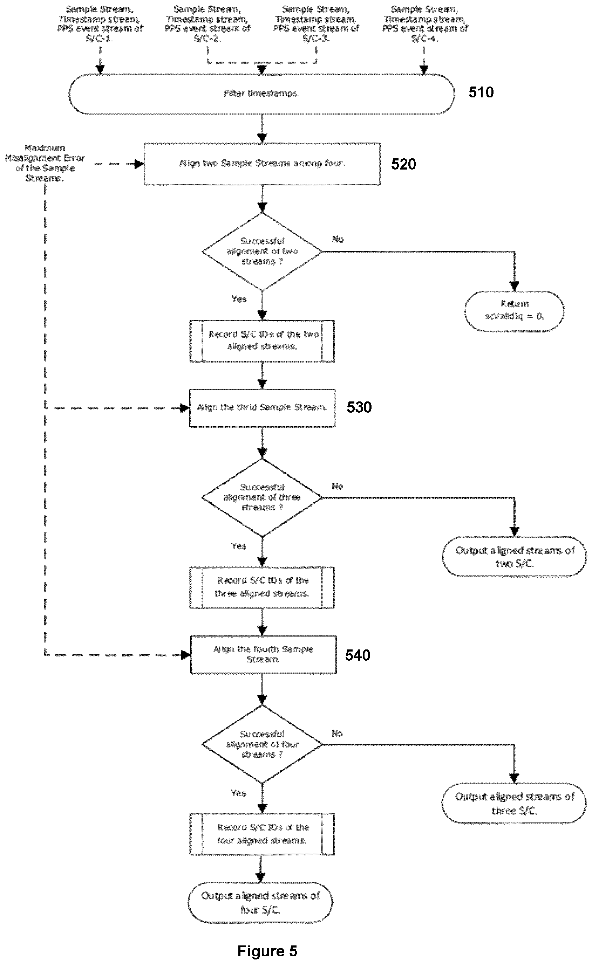

At step 410 a process of sample stream alignment is carried out. Each sample stream 310, 710, 720 comprises timestamps 730, and also Pulse Per Second (PPS) event information that indicates whether a value of time and date in each timestamp 730 was generated by a PPS event for each timestamp 730. The process of sample stream alignment is further detailed below with reference to Figure 5, and results in unaligned sample streams 710, 720 such as those shown in Figure 7 being start-time-aligned, resulting in start-time-aligned sample streams 810, 820 shown in Figure 8. The step of sample stream alignment 410 is successful when sample streams 710, 720 belonging to two, three, or four vehicles have been aligned with respect to a predetermined (optionally configurable) maximum Misalignment Error threshold, which is a predetermined maximum time difference that is permitted between sample streams from different vehicles (this limit being the maximum permitted time offset above which location estimation based upon the sample stream data content becomes degraded beyond commercial usefulness, for example the limit can be 40 ns, or at least between 20ns and 50ns, or between 10ns and 100ns). This criteria for successful alignment permits location estimation to begin (albeit with reduced accuracy) when only 2 vehicle sample streams 710, 720 have been aligned, and then later on further vehicle sample streams can be used when they have also been synchronised.

At step 420, sampling times of vehicle positional data (which is e.g. embedded in the sample streams by the vehicles) are compared with timestamps 730 of the sample streams that have been aligned in step 410 in accordance with the predetermined maximum time difference. In this step, vehicle positional data belonging to the vehicles whose sample streams have been successfully aligned is filtered in accordance with the timestamp value 740 of the earliest sample remaining after time alignment in step 410, and in accordance with the timestamp value of the latest samples, such that positional data corresponding to times outside of the period covered by timestamps in the aligned sample streams (i.e. positional data relating to non-aligned samples) is filtered out. This step 420 of positional data validation/filtering is considered successful when vehicle positional data belonging to two, three, or four vehicles remains after filtering. Similarly to the step above, this criteria for successful positional data validation/filtering permits location estimation to begin (albeit with reduced accuracy) when only 2 vehicle sample streams 710, 720 (with validated positional data) have been aligned, and then later on further vehicle sample streams can be used when they have been synchronised/validated.

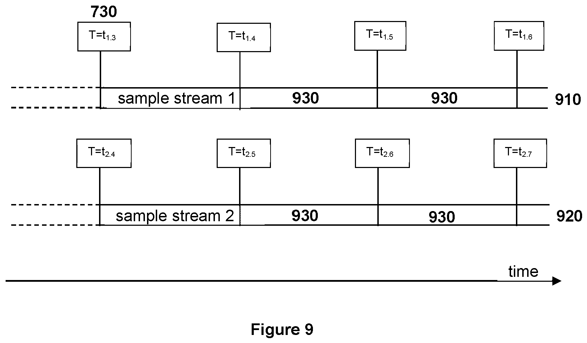

At step 430, correction for sampling clock frequency/phase differences and/or drift is optionally carried out, such that for example start-time-aligned sample streams 810, 820 as shown in Figure 8 can be stretched/compressed/time-shifted so that their sample rates are then common. Figure 9 illustratively shows rate-corrected sample streams 910, 920 (in that example, the sampling rate correction has resulted in timestamps becoming aligned, but this is merely illustrative and may not be the case always).

At step 440, to simplify subsequent processing, the rate-corrected sample streams 910, 920 are preferably "reshaped" into segments 930 of a predetermined size/length that is preferably equal to the (now common) sampling rate of the rate-corrected sample streams 910, 920 multiplied by the "integration time" which is the time period over which TDOA is estimated. As shown in Figure 9, each segment 930 is accompanied by a timestamp 730 that indicates its received date and time.

At step 450, validated positional data for each vehicle is attached to each segment 930 originating from that vehicle. Optionally, a matrix of status data can be maintained, indicating for each segment 930 of each vehicle whether the attachment of positional data was performed successfully.

At step 460, calibration parameters for use when later estimating location by TDOA (or other such differential technique) can optionally be calculated, based upon the aligned and validated timestamps resulting from the above steps, and further based upon a vector of calibration parameters obtained from a separate calibration module. The calibration parameters, as mentioned earlier, are used to mitigate timing error biases, and are applied at this step to the timestamps of each sample stream 710, 720 that has been processed by the steps above.

Referring to Figure 5, details of a sample stream alignment algorithm will now be described. In overview, the sample stream alignment algorithm aligns the timestamps 730 that are associated with the sample streams 710, 720 of either two, three or four vehicles. Sample stream alignment is necessary due to the vehicles' internal clocks being unsynchronised with respect to one another, and due to GNSS receivers of the different vehicles obtaining lock at different times (only at which point are the vehicles able to commence attaching timestamp information to their sample data values). Thus, the start dates and times of the timestamp streams from different vehicles are not identical, and must be aligned. For commercially viable performance, two timestamps 730 emanating from two distinct vehicles but sharing the epoch (in terms of number of seconds) should have an absolute time difference below a predetermined maximum time difference, e.g. 40 ns. Finding the earliest common start date and time of firstly two, and optionally later three or four vehicles, permits alignment of the sample streams 710, 720 by discarding or at least disregarding samples in the respective streams 710, 720 prior to that earliest common start date/time (since the time difference should remain valid during the entire capture). In more detail, the Sample Streams alignment algorithm is comprised of four steps.

At step 510, timestamps 730 are filtered to remove timestamps 730 likely to contain excessive errors in terms of inaccuracy and/or drift. By way of example, a first class of vehicles may tag sampled data values in the sample streams 710, 720 with only time data obtained from received GNSS data (e.g. such as "pulse per second" or "PSS" events received from a GNSS system). Such GNSS-derived time data can be considered to be acceptably accurate for use when estimating a location of a signal source 230, because the PSS events are generated based on a high-stability atomic clock. A second class of vehicles may tag sampled data values in the sample streams 710, 720 with a combination of time data obtained from GNSS data, and from intervening time data generated onboard the vehicles according to a predetermined/configurable time interval. Such intervening time data may or may not be accurate enough for use when estimating location, for example most commercially available oscillator devices or circuits are subject to frequency drift such as temperature-related frequency drift.

By way of a specific example, one typical commercially-available oscillator has +/-20 parts per million (ppm) stability (e.g. +/- 10ppm frequency tolerance, plus +/- 10ppm frequency stability), which means it is possible (and likely) for the exact value of the sampling rate of each sample stream 710, 720 to be different from that of every other sample stream 710, 720, and different from any reference sampling rate. In this example, setting a reference sampling rate of fs=275kHz would unpredictably result in actual sampling rates ranging from 274.9945 kHz to 275.0055 kHz. Thus, if such an oscillator clock was used to generate the values of sample counters for timestamping, the timestamps 730 from two different vehicles could be offset by up to 11 samples per second (e.g. up to 11 samples difference within the 1 second period between GNSS PPS events), and the more seconds that elapse between re-alignment of the vehicle's onboard clock to reliable timestamp data (e.g. such as that obtained from GNSS PPS events), the greater the potential difference can be between non-GNSS-derived timestamps 730 in different sample streams 710, 720. Thus, for such a second class of vehicles it is chosen to guarantee the accuracy of sample stream timestamps 730 by setting a common sample interval on all vehicles and by filtering timestamps 730 (i.e. discarding or disregarding timestamps 730 that are not derived from GNSS PPS events). This can be achieved by inspecting a flag present in each timestamp 730 that indicates whether or not it was derived from a GNSS PPS event. For the first class of vehicles which only generate timestamps 730 based on GNSS PPS events, no such filtering is required. Likewise, for a third class of vehicles that generates intermediate timestamps 730 based on an internal clock, but wherein that internal clock is automatically adjusted to align with the GNSS PSS events (such an internal clock is termed a "GNSS Disciplined Oscillator"), the intermediate timestamps 730 can be of sufficient accuracy to be used for location estimation, and thus no filtering of timestamps 730 is required.

Following timestamp filtering at step 510, at step 520 the starts of the sample streams 710, 720 of two vehicles are aligned. This is achieved by comparing pairs of timestamps 730 (post-filtering), each pair comprising a timestamp 730 from a first sample stream 710 from one vehicle, and a timestamp 730 from a second sample stream 720 from another vehicle, wherein a time difference between each pair of compared timestamps 730 is determined. A search is performed to find a pair of timestamps 730 that have absolute time difference values below the predetermined maximum time difference previously discussed above (the predetermined maximum misalignment error threshold for the sample streams, which is the maximum time misalignment that can be tolerated, e.g. 40ns, or perhaps 10 to 100ns, before the accuracy of location estimation is degraded to the point where it is no longer commercially useful). As part of this search, the filtered timestamps 730 that meet the predetermined maximum time difference can be sorted, e.g. in ascending or descending order, to aid selection of timestamps 730 that have time differences within the predetermined maximum time difference limit. If the search is successful (if not then the search is continued), then one of the pairs of timestamps 730 is selected for which the difference between the timestamps 730 does not exceed the predetermined maximum time difference limit (and the timestamps 730 belong to two distinct vehicles). A common start date and time 740 is thus identified for those two respective sample streams 710, 720, within the tolerance of the predetermined maximum time difference, and the starts of the two sample streams 710, 720 are aligned by discarding (or at least disregarding) any samples (data values in the sample streams 710, 720) corresponding to timestamps 730 which are earlier than the common start date and time 740. Optionally, Identifiers (IDs) of the first and second vehicles are then recorded in a status table.

At step 530, a further common start date and time between the timestamp stream of a third sample stream (from a corresponding third vehicle) and one or other of the two already-aligned (in step 520) sample streams 710, 720 is sought using a similar technique as detailed for step 520. If this search is successful (if not then the search is continued) then the third sample stream is then aligned with the two already-aligned sample streams 710, 720, according to the found further common start time and date. Optionally, an Identifier (ID) of the third vehicle is then recorded in a status table, along with the IDs of the two other vehicles.

At step 540, a yet further common start date and time between the timestamp stream of a fourth (and/or further) sample stream (from a corresponding fourth vehicle, and/or further vehicles) and any one of the three already-aligned (in steps 520 and 530) timestamp streams is sought using a similar technique as detailed for step 530. If this search is successful (if not then the search is continued) then the fourth (or further) sample stream is then aligned with the three already-aligned sample streams, according to the yet further found common start time and date. Optionally, an Identifier (ID) of the fourth (or further) vehicle is then recorded in a status table, along with the IDs of the three other vehicles.

It has been found that initially aligning only two sample streams 710, 720, instead of all three or four at the same time, prevents losing exploitable data in the case where one or two timestamp streams (among the total number of sample streams to be synchronised) are not accurate at the beginning of the capture. The above sample stream alignment algorithm firstly aligns two valid timestamped sample streams 710, 720, whereupon the GMS 300 and its location processing module 330 can initially operate with only two vehicles at the beginning of the signal capture, and then the more accurate (typically later) part of the timestamp streams of the third (and optionally fourth and/or further) vehicle(s) can be aligned and brought into use as soon as possible thereafter. Once the sample streams have been aligned with respect to the found common start dates and times, the samples located in the middle and/or the end of the sample streams representing the received/captured signal can be more easily aligned, e.g. in steps 430 and/or 440 described with reference to Figure 4.

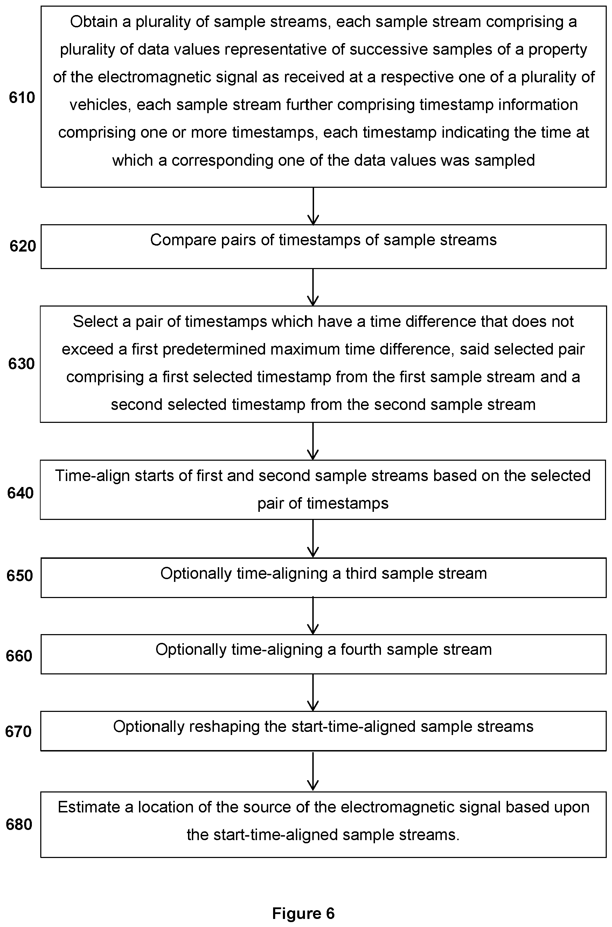

Referring to Figure 6, a general example of a computer-implemented method of processing data for estimating a location of a source 230 of an electromagnetic signal, e.g. a radio signal, will now be described.

In a first step 610, a plurality of sample streams 710, 720 are obtained, wherein each sample stream 710, 720 includes a plurality of data values, each data value being representative of one of a plurality of successive samples of a property of the signal as received at a respective one of a plurality of vehicles (e.g. having respective vehicle positions 110a-110d). For example, the property of the signal can be the amplitude of the signal at the sampling time, or the frequency or phase at the sampling time, or any combination of those properties. Each sample stream further includes timestamp information, e.g. in the form of one or more timestamps 730 attached to particular ones of the samples/data values, with each timestamp 730 indicating the time (and optionally the date) at which a corresponding one of the data values was sampled.

The following steps are then undertaken to align the sample streams 710, 720 such they have a common start time, thereby obtaining start-time-aligned sample streams 810, 820.

In a second step 620, pairs of timestamps 730 are compared, each pair comprising a timestamp 730 from a first sample stream 710 of the plurality of sample streams and a timestamp 730 from a second sample stream 720 of the plurality of sample streams. As many as possible, or as many as necessary, timestamp 730 pairs are compared (e.g. the comparison could start by comparing pairs of timestamps 730 that are closest to the earliest timestamp in each sample stream, and only comparing later timestamps if no match is found among the earlier timestamps). In each comparison, a respective time difference between the respective pair of timestamps 730 is determined.

In a third step 630, a pair of timestamps 730 are selected which have a time difference that does not exceed a predetermined maximum time difference (said selected pair including a first selected timestamp 730 from the first sample stream 710 and a second selected timestamp 730 from the second sample stream 720). The predetermined maximum time difference is, for example, between 10ns and 100ns, or between 20ns and 50ns, and preferably is 40ns, which results in the maximum error between timestamps 730 of the first sample stream 710 and timestamps 730 of the second sample stream 720 being small enough to not too badly adversely affect the accuracy of a location estimation made based on the sample streams 710, 720. This selection is of course dependent upon such a pair of timestamps 730 being found, and if no such pair of timestamps 730 is found then the comparison continues until such a pair of timestamps 730 is found. The comparison can be extended to a different pair of sample streams (corresponding to a different pair of vehicles) if no selection can be made from the initially chosen first and second sample streams 710, 720.

In a fourth step 640, the starts of the first and second sample streams 710, 720 (or whichever sample streams the selected timestamps 730 are found in - from herein the terms "first sample stream" and "second sample stream" are used to refer to those sample streams) are time-aligned. This is achieved (based on the selected pair of timestamps 730) by disregarding (or deleting) data values in the first sample stream 710 which are earlier than the first selected timestamp, and disregarding (or deleting) data values in the second sample stream 720 which are earlier than the second selected timestamp.

Having start-time-aligned first and second sample streams 710, 720, subsequent processing of the sample streams 810, 820 is made easier, and at step 680 a step can be performed of estimating a location of the source 230 of the signal based upon the start-time-aligned sample streams 810, 820. The step of estimating 680 is performed using differential techniques such as TDOA (Time Difference of Arrival) and/or Frequency Difference of Arrival (FDOA), and in some circumstances can be performed on only two sample streams initially. The estimating 680 is improved if further sample streams are available, therefore optionally further steps can be performed as follows to align further sample streams to the start-time-aligned first and second sample streams 810, 820.

At step 650 of Figure 6, a third sample stream can preferably but optionally be aligned by the following sub-steps: firstly comparing further (second) pairs of timestamps, each further pair of timestamps including a timestamp from one of the first and second sample streams, and also including a timestamp from a third sample stream of the plurality of sample streams (corresponding to a third vehicle). As part of the comparison, a respective time difference between each compared second pair of timestamps is determined. Secondly, a selection is made of one of the second pairs of timestamps which has a time difference that does not exceed a second predetermined maximum time difference (which for example can be equal to the predetermined maximum time difference in step 630, but feasibly can be different - e.g. it may be determined that greater accuracy and thus a smaller maximum time difference is needed in step 630 than is needed in this step 650, and so the second predetermined maximum time difference could in such a case be predetermined to be greater than the predetermined maximum time difference used in step 630). Widening the maximum time difference, while potentially reducing accuracy of the location estimation, could potentially conversely increase the accuracy of the location estimation if the widening allowed a match of timestamps that enabled a further sample stream to be aligned and used for the location estimation. The selected second pair of timestamps includes a (third) selected timestamp from the first or the second sample stream and a (fourth) selected timestamp from the third sample stream. Thirdly, the starts of the first to third sample streams are time-aligned, which involves disregarding (or deleting) data values in the first and second sample streams 710, 720 which are earlier than the third selected timestamp, and disregarding (or deleting) data values in the third sample stream which are earlier than the fourth selected timestamp.

At step 660, preferably but optionally a fourth sample stream can be aligned with the first to third sample streams, by the following steps: firstly comparing yet further (third) pairs of timestamps, each yet further pair including a timestamp from one of the already-aligned first to third sample streams, and a timestamp from a fourth sample stream of the plurality of sample streams (corresponding to a fourth vehicle). The comparing includes determining a respective time difference between each third pair of timestamps. Secondly, one of the third pairs of timestamps is selected, which has a time difference that does not exceed a third predetermined maximum time difference. The selected third pair of timestamps includes a (fifth) selected timestamp from any of the first to third sample streams and a (sixth) selected timestamp from the fourth sample stream. The third predetermined maximum time difference can be the same as the predetermined maximum time difference in step 630, or can be different, and as described above for step 650 it could be predetermined that less accuracy is needed for the latter/subsequent alignments of sample streams, in which case it could be determined that the third predetermined maximum time difference can be greater than the predetermined maximum time difference of step 630, and/or greater than the second predetermined maximum time difference of step 650. Again, widening the maximum time difference, while potentially reducing accuracy of the location estimation, could potentially conversely increase the accuracy of the location estimation if the widening allowed a match of timestamps that enabled a further sample stream to be aligned and used for the location estimation. Thirdly, the starts of the first to fourth sample streams are start-time-aligned by disregarding (or deleting) data values in the first to third sample streams which are earlier than the fifth selected timestamp, and disregarding data values in the fourth sample stream which are earlier than the sixth selected timestamp.

Preferably in steps 630 to 650, the selected timestamps are those which are earliest in time, since this results in a minimum of captured data being thrown away, thus leaving maximum data available for basing estimation of the location of the signal source upon. To assist with this, the step of obtaining start-time-aligned sample streams is optionally preceded by a step of sorting the timestamps 730 from the plurality of sample streams, and further optionally the sorting is performed in ascending order.

In certain embodiments, the timestamp information of one or more of the sample streams (e.g. that originating from one or more of the vehicles) is derived only from a GNSS (global navigation satellite system) pulse event. In other embodiments, the timestamp information of one or more of the sample streams is derived from both GNSS (global navigation satellite system) pulse events, and from a free-running clock oscillator onboard the respective vehicle. Preferably but optionally, such a free-running clock is disciplined to be synchronised with GNSS pulse events - in other words, the GNSS pulse events (1 per second, otherwise termed "pulse-per-second" or PPS events) are automatically used to tune the onboard clock frequency to exactly match (or as far as possible match) the period between GNSS PPS events such that drift of the on-board free-running clock (and any timestamps generated on the basis of it) is avoided. Nevertheless, optionally the step of obtaining 610 start-time-aligned sample streams is preceded by a step of disregarding (or deleting), from one or more of the data streams, timestamp information that does not correspond to a GNSS (global navigation satellite system) pulse event. This is advantageous to carry out for those sample streams which originate from vehicles that (i) generate timestamps not only from GNSS PPS events but also from their own free-running onboard clock, and that (ii) do not discipline (e.g. synchronise) that onboard clock to GNSS PPS events. That is because for such vehicles, the non-GNSS-derived timestamps may be subject to drift or other inaccuracies, and so those timestamps cannot be relied upon for accuracy and should not be used.

Typically, but optionally, estimating a location of the source 230 of the signal based upon the start-time-aligned sample streams 710, 720 is further based upon vehicle position data indicating the positions 110a-110d of each of the vehicles. This vehicle position data, in combination with differential information that is derivable from the timestamped sample streams, allows differential properties such as TDOA/FDOA to be used to estimate the location of a signal source using multilateration techniques. To enhance the accuracy of such multilateration techniques, by excluding inaccurate data, the vehicle position data is filtered by disregarding (or deleting) vehicle position data that is tagged with timestamp information that is earlier than the timestamp information 740 of the earliest data values remaining in the start-time-aligned sample streams 810, 820, and/or disregarding (or deleting) vehicle position data that is tagged with timestamp information that is later than the timestamp information of the latest data values remaining in the start-time-aligned sample streams 810, 820. To do this conveniently and efficiently, optionally the start-time-aligned sample streams are tagged with one or more of: validated position data for each vehicle; and/or status indicating for each vehicle whether or not the respective vehicle's sample stream can be used for the step of estimating a location, based on the respective vehicle's sample stream having been successfully (or not) start-time-aligned.

Optionally, estimating a location of the source of the signal is further based upon one or more of: a calibration vector used to mitigate timing error biases; and/or
determined validity for each vehicle, based on their position 110a-110d and/or status of successful sample stream alignment.

Optionally, the estimation of a location of the source 230 of the signal is further refined by being based upon a predetermined time period (otherwise termed an "integration period") within which data relating to said time period is used for location estimation and without which (i.e. outside of which) data not relating to said time period is not used for location estimation.

Location estimation is optionally further improved by, prior to the estimating, at step 670 of Figure 6, reshaping each start-time-aligned sample stream into one or more segments 930 of equal predetermined size. This helps to compensate for variation of the frequency of a particular vehicle's onboard sampling clock which it used to sample data values of the respective start-time-aligned sample stream 810, 820 (compared to a frequency of a reference sampling clock, by which data values of a reference one of the start-time-aligned sample streams were sampled). Optionally by way of example, the reshaping can include subdividing, and/or time-stretching or time-compressing. Preferably but optionally, the predetermined size is equal to the sampling rate of the sample streams multiplied by the predetermined time period.

It will be appreciated that the above-described methods which involve processing sample streams from a plurality of vehicles can advantageously be performed at a ground controller station such as a GMS 300. However, it is envisaged that due to the efficiency savings provided by the techniques described herein, such methods could be performed at one or more of the plurality of vehicles, and/or at a separate vehicle.

Advantages and technical effects of aspects and embodiments, including those mentioned above, will be apparent to a skilled person from the foregoing description and from the Figures.

It will be appreciated that the above-described methods can be executed in a system, wherein the system includes a plurality of vehicles, each vehicle having means for successively sampling a property of an electromagnetic signal (e.g. a radio signal or a light signal) as received at the respective vehicle to produce a respective sample stream 710, 720 comprising a plurality of data values, and each vehicle also having means for receiving an GNSS signal and adding timestamp information to the respective sample stream based on the GNSS signal. By way of example, each of the vehicles can be one of a spacecraft, an airborne vehicle, and a marine-based vehicle, in any combination. In such a system, the timestamp information includes at least one timestamp 730, each timestamp 730 indicating the time (and optionally the date) at which a corresponding one of the data values was sampled by the vehicle. Such a system also includes a location estimator such as GMS 300 (comprising data alignment module 320 arranged to align the sample streams, and location processing module 330 arranged to estimate location based on the aligned sample streams) comprising one or more processors that are arranged to carry out all or a part of the above-described method.

It will be appreciated that the described methods can be carried out by one or more computers or controllers, having one or more processors, under control of one or more computer programs arranged to carry out said methods, said computer programs being stored in one or more memories and/or other kinds of computer-readable media.

An example of a networked computer system which can be used to implement the methods described herein will now be described, said computer system comprising one or more cloud servers incorporating one or more databases and hosting one or more web-based applications, one or more gateways, and one or more computing devices (such as a PC, tablet and/or mobile device) for accessing said web application, wherein said cloud servers and said computing devices are communicatively coupled with each other by a computer network. Said computer network can comprise one or more of any kinds of computer network suitable for transmitting or communicating data, for example a local area network, a wide area network, a metropolitan area network, the Internet, a wireless communications network, a cable network, a digital broadcast network, a satellite communication network, a telephone network, etc. Each of the one or more gateways, cloud servers and/or computing devices can operate under control of one or more computer programs arranged to carry out all or a subset of method steps described with reference to any embodiment, thereby interacting with one another so as to collectively carry out the described method steps. Each of the one or more gateways, cloud servers and/or computing devices can comprise a processor, memory, computer-readable storage medium, output interface, input interface and network interface, which can communicate with each other by virtue of one or more data buses. It will be appreciated that one or more of these features may be omitted, depending on the required functionality of said system. Said computer-readable storage medium may be any form of non-volatile and/or non-transitory data storage device such as a magnetic disk or optical disk, or other memory device such as RAM or ROM or Flash memory, and may store data, application program instructions according to one or more embodiments of the disclosure herein, and/or an operating system. The storage medium may be local to the processor, or may be accessed via a computer network or bus. The processor can be any apparatus capable of carrying out method steps according to embodiments of the invention, and can for example comprise a single data processing unit or multiple data processing units operating in parallel or in cooperation with each other, and/or can be implemented as a programmable logic array, graphics processor, or digital signal processor, or a combination thereof. The input interface is arranged to receive input from a user and provide it to the processor, and can comprise, for example, a mouse (or another pointing device), a keyboard and/or a touchscreen device. The output interface optionally provides a visual, tactile and/or audible output to a user of the system, under control of the processor.

It will be appreciated that the above-described partitioning of functionality can be altered without affecting the functionality of the methods and systems, or their advantages/technical effects. The above-described functional partitioning is presented as an example in order that the invention can be understood, and is thus conceptual rather than limiting, the invention being defined by the appended claims. The skilled person will also appreciate that the described method steps may be combined or carried out in a different order without affecting the advantages and technical effects resulting from the invention as defined in the claims. It will be further appreciated that the described functionality can be implemented as hardware (for example, using field programmable gate arrays, ASICs or other hardware logic), firmware and/or software modules, or as a mixture of those modules. It will also be appreciated that, a computer-readable storage medium and/or a transmission medium (such as a communications signal, data broadcast, communications link between two or more computers, etc.), carrying a computer program arranged to implement one or more aspects of the invention, may embody aspects of the invention. The term "computer program," as used herein, refers to a sequence of instructions designed for execution on a computer system, and may include source or object code, one or more functions, modules, executable applications, applets, servlets, libraries, and/or other instructions that are executable by a computer processor.

Various modifications may be made to the preferred embodiments described herein without departing from the scope of the invention as defined by the accompanying claims. Many combinations, modifications, or alterations to the features of the above embodiments will be readily apparent and are intended to form part of the disclosure. Any of the features described specifically relating to one embodiment or example may be used in any other embodiment by making appropriate changes as apparent in the light of the above disclosure.

## Claims

1. A computer-implemented method of processing data for estimating a location of a source of an electromagnetic signal, the method comprising:
obtaining a plurality of sample streams, each sample stream comprising a plurality of data values representative of successive samples of a property of the signal as received at a respective one of a plurality of vehicles, each sample stream further comprising timestamp information comprising one or more timestamps, each timestamp indicating the time at which a corresponding one of the data values was sampled;
obtaining start-time-aligned sample streams by:
(i) comparing pairs of timestamps, each pair comprising a timestamp from a first sample stream of the plurality of sample streams and a timestamp from a second sample stream of the plurality of sample streams, the comparing further comprising determining a respective time difference between at least one pair of timestamps;
(ii) selecting a pair of timestamps which have a time difference that does not exceed a first predetermined maximum time difference, said selected pair comprising a first selected timestamp from the first sample stream and a second selected timestamp from the second sample stream; and
(iii) time-aligning the starts of the first and second sample streams based on the selected pair of timestamps, by disregarding data values in the first sample stream which are earlier than the first selected timestamp, and disregarding data values in the second sample stream which are earlier than the second selected timestamp; and
estimating a location of the source of the signal, based upon the start-time-aligned sample streams.

2. The method of claim 1, wherein obtaining start-time-aligned sample streams further comprises aligning a third sample stream by:
(iv) comparing second pairs of timestamps, each second pair comprising a timestamp from the first sample stream or from the second sample stream, and a timestamp from a third sample stream of the plurality of sample streams, the comparing further comprising determining a respective time difference between at least one second pair of timestamps;
(v) selecting one of the second pairs of timestamps which have a time difference that does not exceed a second predetermined maximum time difference, said selected second pair comprising a third selected timestamp from the first or the second sample stream and a fourth selected timestamp from the third sample stream; and
(vi) time-aligning the starts of the first to third sample streams by disregarding data values in the first and second sample streams which are earlier than the third selected timestamp, and disregarding data values in the third sample stream which are earlier than the fourth selected timestamp,
wherein optionally the second predetermined maximum time difference differs from the first predetermined maximum time difference.

3. The method of claim 2, wherein obtaining start-time-aligned sample streams further comprises aligning a fourth sample stream by:
(vii) comparing third pairs of timestamps, each third pair comprising a timestamp from one of the first to third sample streams, and a timestamp from a fourth sample stream of the plurality of sample streams, the comparing further comprising determining a respective time difference between each third pair of timestamps; and
(viii) selecting one of the third pairs of timestamps which have a time difference that does not exceed a third predetermined maximum time difference, said selected third pair comprising a fifth selected timestamp from any of the first to third sample streams and a sixth selected timestamp from the fourth sample stream; and
(ix) time-aligning the starts of the first to fourth sample streams by disregarding data values in the first to third sample streams which are earlier than the fifth selected timestamp, and disregarding data values in the fourth sample stream which are earlier than the sixth selected timestamp,
wherein optionally the third predetermined maximum time difference differs from at least one of the first and second predetermined maximum time differences.

4. The method of any preceding claim, wherein: the first predetermined maximum time difference is between 10ns and 100ns, and optionally wherein the first predetermined maximum time difference is between 20ns and 50ns, and optionally wherein the first predetermined maximum time difference is about 40ns; and/or wherein the selected timestamps are those which are earliest in time.

5. The method of any preceding claim, wherein the timestamp information comprises date and time information, and optionally wherein: the timestamp information of one or more of the sample streams is derived only from a GNSS (global navigation satellite system) pulse event; or the timestamp information of one or more of the sample streams is derived from both a GNSS (global navigation satellite system) pulse event and a free-running clock in the respective vehicle, wherein optionally the free-running clock is disciplined to be synchronised with GNSS pulse events.

6. The method of any preceding claim, wherein the step of obtaining start-time-aligned sample streams is preceded by a step of sorting timestamps from the plurality of sample streams, and optionally wherein the sorting is performed in ascending order.

7. The method of any of claims 1 to 6, wherein the step of obtaining start-time-aligned sample streams is preceded by a step of disregarding, in one or more of the data streams, timestamp information that does not correspond to a GNSS (global navigation satellite system) pulse event.

8. The method of any preceding claim, wherein estimating a location of the source of the signal based upon the start-time-aligned sample streams is further based upon vehicle position data indicating the position of each of the vehicles, and optionally wherein: (i) the vehicle position data is filtered by disregarding vehicle position data that is tagged with timestamp information that is earlier than the timestamp information of the earliest data values remaining in the start-time-aligned sample streams, or (ii) the vehicle position data is filtered by disregarding vehicle position data that is tagged with timestamp information that is later than the timestamp information of the latest data values remaining in the start-time-aligned sample streams.

9. The method of any preceding claim, wherein estimating a location of the source of the signal is further based upon a predetermined time period within which data relating to said time period is used for location estimation and without which data not relating to said time period is not used for location estimation.

10. The method of any preceding claim, wherein prior to estimating a location of the source of the signal, each start-time-aligned sample stream is reshaped into one or more segments of equal predetermined size to compensate for variation of a frequency of a sampling clock by which data values of the respective start-time-aligned sample stream were sampled, compared to a frequency of a sampling clock by which data values of a reference one of the start-time-aligned sample streams were sampled; and optionally wherein the reshaping comprises subdividing, and/or time-stretching or time-compressing; and optionally where the predetermined size is equal to the sampling rate of the sample streams multiplied by the predetermined time period.

11. The method of any preceding claim, wherein estimating a location of the source of the signal is further based upon one or more of:
a calibration vector used to mitigate timing error biases; and/or
determined validity for each vehicle, based on their position and/or status of successful sample stream alignment.

12. The method of any preceding claim, wherein the start-time-aligned sample streams are tagged with one or more of:
validated position data for each vehicle; and/or
status indicating for each vehicle whether or not the respective vehicle's sample stream can be used for the step of estimating a location, by virtue of the respective vehicle's sample stream having been successfully start-time-aligned.

13. Apparatus comprising one or more processors configured to carry out the method of any one of claims 1 to 12.

14. A computer program comprising machine-readable instructions that when executed by one or more processors causes the one or more processors to carry out the method of any one of claims 1 to 12.

15. One or more computer-readable media having stored thereupon a computer program as defined in claim 14.
